(19) Europäisches Patentamt
European Patent Office
Office européen des brevets

(11) EP 4 101 873 A1

(12) # EUROPÄISCHE PATENTANMELDUNG

(43) Veröffentlichungstag:
**14.12.2022 Patentblatt 2022/50**

(21) Anmeldenummer: **21179102.5**

(22) Anmeldetag: **11.06.2021**

(51) Internationale Patentklassifikation (IPC):
***C08G 18/16*** *(2006.01)* ***C08G 18/44*** *(2006.01)*
***C08G 18/76*** *(2006.01)*

(52) Gemeinsame Patentklassifikation (CPC):
**C08G 18/44; C08G 18/163; C08G 18/7621;**
C08G 2110/0008; C08G 2110/005;
C08G 2110/0083

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **GOSSNER, Matthäus**
**51061 Köln (DE)**
- **BRASSAT, Lutz**
**51375 Leverkusen (DE)**

(74) Vertreter: **Levpat**
**c/o Covestro AG**
**Gebäude K12**
**51365 Leverkusen (DE)**

(54) **EINSATZ VON BISMUT-KATALYSATOREN ZUR VERRINGERUNG VON CYCLISCHEM PROPYLENCARBONAT BEI DER HERSTELLUNG VON WEICHSCHAUMSTOFFEN BASIEREND AUF POLYETHERCARBONATPOLYOLEN**

(57) Die vorliegende Erfindung betrifft ein Verfahren zur Herstellung von Polyurethanschaumstoffen durch Umsetzen einer spezifischen Polyolkomponente, eines Katalysatorsystem enthaltend mindestens einen Katalysator ausgewählt aus aliphatischen tertiären Aminen, cycloaliphatischen tertiären Aminen, aliphatischen Aminoethern, cycloaliphatischen Aminoethern, aliphatischen Amidinen, cycloaliphatischen Amidinen, Harnstoff und Derivate des Harnstoffs und mindestens einen Bismut basierten Katalysator, Wasser und/oder mindestens ein physikalisches Treibmittel mit mindestens einem Di- und/oder Polyisocyanat, wobei die Herstellung bei einer Kennzahl von 90 bis 120 erfolgt. Ferner betrifft die Erfindung den Polyurethanschaumstoff, erhältlich durch ein Verfahren gemäß der vorliegenden Erfindung sowie dessen Verwendung zur Herstellung von Möbelpolsterungen, Textileinlagen, Matratzen, Automobilsitze, Kopfstützen, Armlehnen, Schwämme, Schaumstofffolien zur Verwendung in Automobilteilen und Bauelementen.

EP 4 101 873 A1

## Beschreibung

Die vorliegende Erfindung betrifft ein Verfahren zur Herstellung von Polyurethanschaumstoffen durch Umsetzen einer spezifischen Polyolkomponente, eines Katalysatorsystem enthaltend mindestens einen Katalysator ausgewählt aus aliphatischen tertiären Aminen, cycloaliphatischen tertiären Aminen, aliphatischen Aminoethern, cycloaliphatischen Aminoethern, aliphatischen Amidinen, cycloaliphatischen Amidinen, Harnstoff und Derivate des Harnstoffs und mindestens einen Bismut basierten Katalysator, Wasser und/oder mindestens ein physikalisches Treibmittel mit mindestens einem Di- und/oder Polyisocyanat, wobei die Herstellung bei einer Kennzahl von 90 bis 120 erfolgt. Ferner betrifft die Erfindung den Polyurethanschaumstoff, erhältlich durch ein Verfahren gemäß der vorliegenden Erfindung sowie dessen Verwendung zur Herstellung von Möbelpolsterungen, Textileinlagen, Matratzen, Automobilsitze, Kopfstützen, Armlehnen, Schwämme, Schaumstofffolien zur Verwendung in Automobilteilen und Bauelementen.

Zur Herstellung von Weichschaumstoffen basierend auf Polyethercarbonatpolyolen werden z.B. Polyethercarbonatpolyole, Polyetherpolysiloxan-Stabilisatoren, tertiäre Amine sowie Zinnkatalysatoren (z.B. Zinn (II) 2-ethylhexanoat) eingesetzt. Als Treibmittel fungiert Kohlendioxid, das in einer exothermen Reaktion aus Wasser und Toluylendiisocyanat gebildet wird.

Bei der Herstellung von Schaumstoffen basierend auf Polyethercarbonatpolyolen entsteht in einer Nebenreaktion Propylencarbonat. Da diese Schaumstofftypen u.a. in Matratzen und Polstermöbeln Verwendung finden, ist eine Aufgabe die Bereitstellung von solchen Schaumstoffen, in denen die Konzentration von Propylencarbonat auf ein Minimum reduziert ist.

In der Praxis werden die betreffenden Weichschaumstoffe einem speziellen Emissionskammertest-Verfahren unterzogen (z.B. gemäß dem Testsiegel "LGA-schadstoffgeprüft", durchgeführt durch den TÜV Rheinland; oder gemäß IOS-MAT-0010 (IKEA-Spezifikation) durchgeführt z.B. durch das Institut WKI Fraunhofer).

Zahlreiche Komponenten wurden auf ihre Wirksamkeit dahingehend getestet, um die Konzentration an cyclischem Propylencarbonat zu reduzieren. So wurde beispielsweise gefunden, dass das Produkt Fyrol PNX-LE (CAS Nr. 184538-58-7) von ICL Industrial Products, ein Alkylphosphat, geeignet ist, die Konzentration an Propylencarbonat signifikant zu reduzieren.

Der Nachteil von Fyrol PNX-LE besteht in dem Umstand, dass die Stauchhärte des resultierenden Schaumstoffes durch dieses Additiv deutlich verringert wird. Weitere Punkte sind der eigentümliche Geruch und die Einstufung von Fyrol PNX-LE als Flammschutzmittel (was von manchen Verarbeitern als ein Problem angesehen wird).

Die Aufgabe der vorliegenden Erfindung war deshalb das Bereitstellen eines Weichschaumstoffs basierend auf Polyethercarbonatpolyolen, welche eine niedrige Propylencarbonatkonzentration aufweisen und dies ohne den Zusatz von Phosphaten erreichen.

Überraschenderweise wurde diese Aufgabe gelöst durch ein Verfahren zur Herstellung von Polyurethanschaumstoffen durch Umsetzung der folgenden Komponenten

A eine Polyolkomponente, enthaltend

> A1 40 bis 100 Gew.-Teile mindestens eines Polyethercarbonatpolyols mit einer Hydroxylzahl gemäß DIN 53240-1:2016-06 von 20 mg KOH/g bis 120 mg KOH/g,
> A2 0 bis 60 Gew.-Teile mindestens eines Polyetherpolyols mit einer Hydroxylzahl gemäß DIN 53240-1:2013-06 von 20 mg KOH/g bis 250 mg KOH/g und einem Gehalt an Ethylenoxid von 0 bis 60 Gew.-%, wobei Polyetherpolyol A2 frei von Carbonateinheiten ist, wobei die Summe der Gewichtsteile von A1 + A2 = 100 Gewichtsteile beträgt,

B enthaltend

> B1 ein Katalysatorsystem enthaltend
>
> > a) mindestens einen Katalysator ausgewählt aus aliphatischen tertiären Aminen, cycloaliphatischen tertiären Aminen, aliphatischen Aminoethern, cycloaliphatischen Aminoethern, aliphatischen Amidinen, cycloaliphatischen Amidinen, Harnstoff und Derivate des Harnstoffs und
> > b) mindestens einen Bismut basierten Katalysator, und
>
> B2 gegebenenfalls mindestens ein Additiv,

C Wasser und/oder mindestens ein physikalisches Treibmittel,
mit
D mindestens einem Di- und/oder Polyisocyanat,

wobei die Herstellung bei einer Kennzahl von 90 bis 120 erfolgt.

In einem zweiten Aspekt betrifft die vorliegende Erfindung einen Polyurethanschaumstoff, erhältlich durch ein Verfahren gemäß der vorliegenden Erfindung.

In einem dritten Aspekt betrifft die vorliegende Erfindung die Verwendung eines Polyurethanschaumstoffs gemäß der vorliegenden Erfindung zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindung bezieht sich diese Angabe nicht auf die absolute Menge an Molekülen sondern auf die Art des Bestandteils. "Mindestens eine Polyolkomponente" bedeutet daher beispielsweise ein oder mehrere verschiedene Arten von Polyolkomponenten und betrifft nicht die Anzahl einer einzelnen Art von Polyolkomponente in der Zusammensetzung.

Zahlenwerte, die hierin ohne Dezimalstellen angegeben sind, beziehen sich jeweils auf den vollen angegebenen Wert mit einer Dezimalstelle. So steht beispielsweise "99%" für "99,0%".

Der Ausdruck "ungefähr" oder "etwa", in Zusammenhang mit einem Zahlenwert, bezieht sich auf eine Varianz von ±10% bezogen auf den angegebenen Zahlenwert, vorzugsweise ±5%, besonders bevorzugt ±1%.

Der Ausdruck "im Wesentlichen frei von" gemäß der vorliegenden Erfindung ist so zu verstehen, dass die jeweilige Verbindung in so geringen Mengen vorhanden ist, dass sie keinen negativen Einfluss auf die Zusammensetzung hat, insbesondere ist die jeweilige Verbindung in weniger als 0,5 Gew.-%, bevorzugt 0,1 Gew.-%, noch stärker bevorzugt 0,01 Gew.-% bezogen auf das Gesamtgewicht der Zusammensetzung in der Zusammensetzung enthalten. Insbesondere ist die jeweilige Verbindung gar nicht in der Zusammensetzung enthalten.

Angaben zur zahlenmittleren Molmasse Mn beziehungsweise zur gewichtsmittleren Molmasse Mw werden ermittelt durch Messung mittels Gelpermeationschromatographie (GPC). Es wurde gegen Polystyrol-Standards gemessen.

Diese und weitere Aspekte, Ausführungsformen, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist.

Bevorzugter Gegenstand der Erfindung ist ein Verfahren, dadurch gekennzeichnet, dass Komponente A die folgende Zusammensetzung aufweist:

A1 40 bis 100 Gew.-Teile mindestens eines Polyethercarbonatpolyols mit einer Hydroxylzahl gemäß DIN 53240-1:2016-06 von 20 mg KOH/g bis 120 mg KOH/g,

A2 0 bis 60 Gew.-Teile mindestens eines Polyetherpolyols mit einer Hydroxylzahl gemäß DIN 53240-1:2016-06 von 20 mg KOH/g bis 250 mg KOH/g und einem Gehalt an Ethylenoxid von 0 bis 60 Gew.-%, wobei Polyetherpolyol A2 frei von Carbonateinheiten ist,

A3 0 bis 20 Gew.-Teile, bezogen auf die Summe der Gew.-Teile der Komponenten A1 und A2, mindestens eines Polyetherpolyols mit einer Hydroxylzahl gemäß 53240-1:2016-06 20 mg KOH/g bis 250 mg KOH/g, und einem Gehalt an Ethylenoxid von > 60 Gew.-%, wobei Polyetherpolyol A3 frei von Carbonateinheiten ist,

A4 0 bis 40 Gew.-Teile, bezogen auf die Summe der Gew.-Teile der Komponenten A1 und A2, mindestens eines Polymerpolyols, mindestens eines PHD-Polyols und/oder mindestens eines PIPA-Polyols,

A5 40 bis 0 Gew.-Teile, bezogen auf die Summe der Gew.-Teile der Komponenten A1 und A2, mindestens eines Polyols, welches nicht unter die Definition der Komponenten A1 bis A4 fällt,

wobei die Angabe der Gewichtsteile der Komponenten A3, A4 und A5 jeweils bezogen sind auf die Summe der Gewichtsteile der Komponenten A1 + A2 = 100 Gewichtsteile.

Ein weiterer bevorzugter Gegenstand ist ein Verfahren gemäß der vorliegenden Erfindung, dadurch gekennzeichnet, dass Komponente A frei ist von Komponenten A3 und/oder A4.

Bevorzugt ist ebenfalls ein Verfahren gemäß der vorliegenden Erfindung, dadurch gekennzeichnet, dass Komponente A umfasst:

A1 65 bis 75 Gew.-Teile mindestens eines Polyethercarbonatpolyols mit einer Hydroxylzahl gemäß DIN 53240-1:2016-06 von 20 mg KOH/g bis 120 mg KOH/g, und

A2 25 bis 35 Gew.-Teile mindestens eines Polyetherpolyols mit einer Hydroxylzahl gemäß DIN 53240-1:2016-06 von 20 mg KOH/g bis 250 mg KOH/g und einem Gehalt an Ethylenoxid von 0 bis 60 Gew.-%, wobei Polyetherpolyol A2 frei von Carbonateinheiten ist.

In einer weiteren bevorzugten Ausführungsform ist das Verfahren dadurch gekennzeichnet, dass Komponente A1 mindestens ein Polyethercarbonatpolyol umfasst, welches erhältlich ist durch Copolymerisation von Kohlendioxid und Alkylenoxid in Gegenwart H-funktioneller Startermoleküle, wobei das Polyethercarbonatpolyol vorzugsweise einen $CO_2$ Gehalt von 10 bis 25 Gew.-% aufweist.

In einer Ausführungsform ist das erfindungsgemäße Verfahren dadurch gekennzeichnet, dass als Komponente B1b Bismutcarboxylate und Derivate davon eingesetzt werden.

In einer weiteren Ausführungsform ist das erfindungsgemäße Verfahren dadurch gekennzeichnet, dass Komponente B1a zu B1b in einem Gewichtsverhältnis von 0,09 : 2,75, bevorzugt 0,12 : 2,20 oder 0,15 : 1,8 vorliegt, bevorzugt ist B1a Bis (2-dimethylaminoethyl)ether oder 1,4-Diazabicyclo-[2,2,2]-octan. Geeignete Komponenten B1a sind beispielsweise kommerziell erhältlich unter der Bezeichnung NIAX CATALYST A-1 von Momentive Performance Materials GmbH oder DABCO 33 LV von Evonik, Essen.

Ein weitere bevorzugter Gegenstand ist ein erfindungsgemäßes Verfahren, dadurch gekennzeichnet, dass Komponente D 2,4- und/oder 2,6-TDI enthält oder daraus besteht.

Dabei sind die angegebenen Bereiche und Vorzugsbereiche der Komponenten A1, A2, A4 und A5 miteinander frei kombinierbar.

Ein weiterer bevorzugter Gegenstand ist ein erfindungsgemäßer Polyurethanschaumstoff, dadurch gekennzeichnet, dass der Polyurethanschaumstoff einen Propylencarbonatgehalt von weniger als 80, bevorzugt weniger als 60, stärker bevorzugt weniger als 50 mg/kg, am stärksten bevorzugt weniger als 15 mg/kg oder 10 mg/kg aufweist, gemessen mittels Headspace GC/MS.

Die Headspace-GC/MS ist eine Dampfraumanalyse mittels derer leichtflüchtige Komponenten in festen oder flüssigen Proben charakterisiert werden können. Dazu muss unter erhöhter Temperatur eine Gasextraktion stattfinden. Die störende Matrix (feste Bestandteile, Salze, nicht flüchtige Anteile) wird so von den leichtflüchtigen Bestandteilen der Probe abgetrennt. Das Ganze passiert in einem gasdicht verschlossenen Headspace-Vial. Dieses wird dann im Headspace-Ofen getempert, wo sich schließlich ein Gleichgewicht zwischen den flüchtigen Bestandteilen im Dampfraum und der Probe einstellt. Über eine Dosiernadel wird mit Hilfe eines Überdrucks, welcher durch das Einführen von Trägergas aus dem Gaschromatographen in das Headspace-Vial über die Nadel erzeugt wird, das Gasgemisch über der Probe in den Gaschromatographen injiziert. Dazu werden Ventile geöffnet und das Gas strömt über eine beheizte Transferline direkt in den Injektor des Gaschromatographen. Nach der chromatographischen Trennung werden die eluierten Stoffe über eine beheizte Transferline in das Massenspektrometer geleitet. Dort werden sie mittels Elektronenstoßionisation fragmentiert, nach Masse zu Ladung sortiert und schließlich detektiert. Man erhält für jede Komponente ein spezifisches Massenspektrum, welches qualitative Aussagen ermöglicht. Neben der Detektion mittels Massenselektivem Detektor (MSD), findet zusätzlich eine Detektion mit Flammenionisationsdetektor (FID) statt. Diese wird für die quantitative Bestimmung genutzt.

Die Trennsäule ist bevorzugt eine Rxi®-5Sil-MS, kommerziell erhältlich von Restek, mit einer Länge von 20 m, einem Durchmesser von 0,15 mm und einer Filmdicke von 2 μm. Die Ofentemperatur des Headspace-Ofens liegt bevorzugt bei 165°C. Das Headspace-Vial wird bevorzugt für 15 min temperiert. Die Druckaufbauzeit beträgt bevorzugt 1 min, die Verweilzeit 0,5 min und die Injektionszeit 0,04 min. Die Temperatur der Injektionsnadel beträgt bevorzugt 172°C und die Temperatur der Transferline liegt bevorzugt bei 195°C. Die Starttemperatur liegt bevorzugt bei 34°C und wird 2 min gehalten. Danach wird bevorzugt mit einer Rate von 12°C/min bis zu einer Endtemperatur von 320°C hoch geheizt und für 15 min gehalten. Bei quantitativen Bestimmungen werden bevorzugt immer Doppelbestimmungen durchgeführt. Dafür werden bevorzugt jeweils ca. 100 mg Probe genau in das Messvial eingewogen. Anschließend werden bevorzugt jeweils 20 mg (ein Tropfen) der Standardlösung genau zugegeben.

Ferner ist ein bevorzugter erfindungsgemäßer Polyurethanschaumstoff dadurch gekennzeichnet, dass es sich um einen Polyurethan-Weichschaumstoff handelt.

Im Folgenden sind die im erfindungsgemäßen Verfahren eingesetzten Komponenten näher beschrieben.

Komponente A1

Die Komponente A1 umfasst ein Polyethercarbonatpolyol mit einer Hydroxylzahl (OH-Zahl) gemäß DIN 53240-1 (Juni 2013) von 20 mg KOH/g bis 120 mg KOH/g, vorzugsweise von 20 mg KOH/g bis 100 mg KOH/g, besonders bevorzugt von 25 mg KOH/g bis 90 mg KOH/g, welches bevorzugt erhältlich ist durch Copolymerisation von Kohlendioxid, einem oder mehreren Alkylenoxiden, in Gegenwart eines oder mehrerer H-funktioneller Startermoleküle, wobei das Polyethercarbonatpolyol vorzugsweise einen $CO_2$-Gehalt von 10 bis 25 Gew.-% aufweist. Bevorzugt umfasst Komponente A1 ein Polyethercarbonatpolyol, welches erhältlich ist durch Copolymerisation von 2 Gew.-% bis 30 Gew.-% Kohlendioxid und 70 Gew.-% bis 98 Gew.-% einem oder mehreren Alkylenoxiden, in Gegenwart eines oder mehrerer H-funktioneller Startermoleküle mit einer durchschnittlichen Funktionalität von 1 bis 6, bevorzugt von 1 bis 4, besonders bevorzugt von 2 bis 3. Unter "H-funktionell" wird im Sinne der Erfindung eine Starterverbindung verstanden, die gegenüber Alkoxylierung aktive H-Atome aufweist.

Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Vorzugsweise weisen die erfindungsgemäß eingesetzten Polyethercarbonatpolyole zwischen den Carbonatgruppen auch Ethergruppen auf, was in Formel (I) schematisch dargestellt wird. In dem Schema gemäß Formel (I) steht R für einen organischen Rest wie Alkyl, Alkylaryl oder Aryl, der jeweils auch Heteroatome wie beispielsweise O, S, Si usw. enthalten kann, e und f stehen für eine ganzzahlige Zahl. Das im Schema gemäß Formel (I) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (I) gezeigte Polyethercarbonatpolyol beschränkt ist. In Bezug auf Formel (I) bedeutet dies, dass das Verhältnis von e/f bevorzugt von 2 : 1 bis 1 : 20, besonders bevorzugt von 1,5 : 1 bis 1 : 10 beträgt.

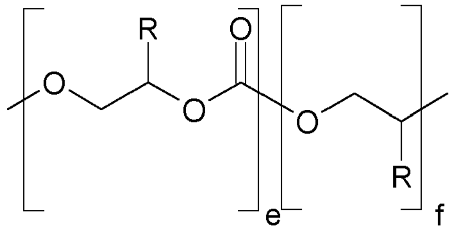

(I)

Der Anteil an eingebautem $CO_2$ ("aus Kohlendioxid stammende Einheiten"; "$CO_2$-Gehalt") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerät ist von der Firma Bruker, DPX 400, 400 MHz; Pulsprogramm zg30, Wartezeit d1: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:

Cyclisches Propylencarbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8-Octandiol mit einer Resonanz bei 1,6 bis 1,52 ppm.

Der Gewichtsanteil (in Gew.-%) polymer-gebundenen Carbonats (LC') in der Reaktionsmischung wurde nach Formel (II) berechnet,

$$LC' = \frac{\left[F(5{,}1-4{,}8) - F(4{,}5)\right] * 102}{N} * 100\% \qquad \text{(II)}$$

wobei sich der Wert für N ("Nenner" N) nach Formel (III) berechnet:

$$N = \left[F(5{,}1-4{,}8) - F(4{,}5)\right] * 102 + F(4{,}5) * 102 + F(2{,}4) * 58 + 0{,}33 * F(1{,}2-1{,}0) * 58 + 0{,}25 * F(1{,}6-1{,}52) * 146 \qquad \text{(III)}$$

Dabei gelten folgende Abkürzungen:

F(4,5) = Fläche der Resonanz bei 4,5 ppm für cyclisches Carbonat (entspricht einem H-Atom)
F(5,1-4,8) = Fläche der Resonanz bei 5,1 bis 4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2 bis 1,0 ppm für Polyetherpolyol
F(1,6-1,52) = Fläche der Resonanz bei 1,6 bis 1,52 ppm für 1,8-Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert

aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (IV) berechnet,

$$CC' = \frac{F(4,5) * 102}{N} * 100\% \qquad \text{(IV)}$$

wobei sich der Wert für N nach Formel (III) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Beispielsweise umfasst die Herstellung von Polyethercarbonatpolyolen gemäß A1:

($\alpha$) eine H-funktionelle Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Starterverbindung oder dem Gemisch von mindestens zwei H-funktionellen Starterverbindungen vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) ein oder mehrere der Alkylenoxide und Kohlendioxid zu der aus Schritt ($\beta$) resultierenden Mischung zugesetzt werden, wobei die in Schritt ($\beta$) eingesetzten Alkylenoxide gleich oder verschieden sein können von den bei Schritt ($\gamma$) eingesetzten Alkylenoxiden.

Allgemein können zur Herstellung der Polyethercarbonatpolyole A1 Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Propylenoxid eingesetzt.

In einer bevorzugten Ausführungsform der Erfindung liegt der Anteil an Ethylenoxid an der insgesamt eingesetzten Menge an Propylenoxid und Ethylenoxid bei 0 bis 90 Gew.-%, bevorzugt bei 0 bis 50 Gew.-% und besonders bevorzugt frei von Ethylenoxid.

Als geeignete H-funktionelle Startverbindung können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Starterverbindung wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an $\varepsilon$-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Starterverbindungen können auch aus der Substanzklasse der Polyetherpolyole ausgewählt sein, insbesondere solchen mit einem Molekulargewicht $M_n$ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht $M_n$ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht $M_n$ von 150 bis 2000 g/mol bevorzugt.

Des Weiteren können als H-funktionelle Starterverbindungen Polycarbonatpolyole (wie beispielsweise Polycarbonatdiole) eingesetzt werden, insbesondere solchen mit einem Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Ebenfalls können Polyethercarbonatpolyole als H-funktionelle Starterverbindungen eingesetzt werden. Insbesondere werden Polyethercarbonatpolyole, die nach dem oben beschriebenen Verfahren hergestellt werden, eingesetzt. Diese als H-funktionelle Starterverbindungen eingesetzten Polyethercarbonatpolyole werden hierzu in einem separaten Reaktionsschritt zuvor hergestellt.

Bevorzugte H-funktionelle Starterverbindungen sind Alkohole der allgemeinen Formel (V),

$$HO-(CH_2)_x-OH \qquad (V),$$

wobei x eine Zahl von 1 bis 20, bevorzugt eine gerade Zahl von 2 bis 20 ist. Beispiele für Alkohole gemäß Formel (V) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (V) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt ein zahlenmittleres Molekulargewicht $M_n$ im Bereich von 62 bis 4500 g/mol und insbesondere ein zahlenmittleres Molekulargewicht $M_n$ im Bereich von 62 bis 3000 g/mol, ganz besonders bevorzugt ein Molekulargewicht von 62 bis 1500 g/mol. Bevorzugt haben die Polyetherpolyole eine Funktionalität von 2 bis 3.

In einer bevorzugten Ausführungsform der Erfindung ist das Polyethercarbonatpolyol A1 durch Anlagerung von Kohlendioxid und Alkylenoxiden an H-funktionelle Starterverbindungen unter Verwendung von Multimetallcyanid-Katalysatoren (DMC-Katalysatoren) erhältlich. Die Herstellung von Polyethercarbonatpolyolen durch Anlagerung von Alkylenoxiden und $CO_2$ an H-funktionelle Starterverbindungen unter Verwendung von DMC-Katalysatoren ist beispielsweise aus der EP-A 0222453, WO-A 2008/013731 und EP-A 2115032 bekannt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind), besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht $M_n$ größer als 500 g/mol enthalten. Der DMC-Katalysator wird zumeist in einer Menge von ≤ 1 Gew.-%, vorzugsweise in einer Menge von ≤ 0,5 Gew.-%, besonders bevorzugt in einer Menge von ≤ 500 ppm und insbesondere in einer Menge von ≤ 300 ppm, jeweils bezogen auf das Gewicht des Polyethercarbonatpolyols eingesetzt. In einer bevorzugten Ausführungsform der Erfindung weist das Polyethercarbonatpolyol A1 einen Gehalt an Carbonatgruppen ("aus Kohlendioxid stammenden Einheiten"), berechnet als $CO_2$, von 2,0 und 30,0 Gew.-%, bevorzugt von 5,0 und 28,0 Gew.-% und besonders bevorzugt von 10,0 und 25,0 Gew.-% auf.

In einer weiteren Ausführungsform des erfindungsgemäßen Verfahrens weisen das oder die Polyethercarbonatpolyole gemäß A1 eine Hydroxylzahl von 20 mg KOH/g bis 250 mg KOH/g auf und sind erhältlich durch Copolymerisation von 2,0 Gew.-% bis 30,0 Gew.-% Kohlendioxid und 70 Gew.-% bis 98 Gew.-% Propylenoxid in Gegenwart eines hydroxyfunktionellen Startermoleküls, wie beispielsweise Trimethylolpropan und/oder Glycerin und/oder Propylenglykol

und/oder Sorbitol. Die Hydroxylzahl kann gemäß DIN 53240-1 (Juni 2013) bestimmt werden.

In einer weiteren Ausführungsform wird ein Polyethercarbonatpolyol A1 eingesetzt, enthaltend Blöcke gemäß Formel (I) wobei das Verhältnis e/f von 2 : 1 bis 1 : 20 beträgt.

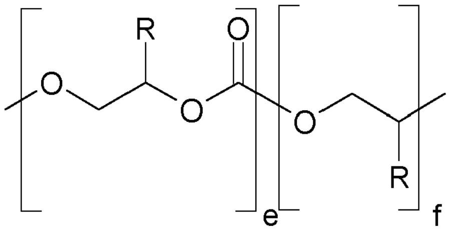

(I)

In einer weiteren Ausführungsform der Erfindung wird Komponente A1 zu 100 Gew.-Teilen eingesetzt.

Komponente A2

Die Komponente A2 umfasst Polyetherpolyole mit einer Hydroxylzahl gemäß DIN 53240-1 (Juni 2013) von 20 mg KOH/g bis 250 mg KOH/g, vorzugsweise von 20 bis 112 mg KOH/g und besonders bevorzugt 20 mg KOH/g bis 80 mg KOH/g und ist frei von Carbonateinheiten. Die Herstellung der Verbindungen gemäß A2 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2-Butylenoxid eingesetzt. Besonders bevorzugt wird ein Überschuss an Propylenoxid und/oder 1,2-Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von 2 bis 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und /oder Glycerin und/oder Trimethylolpropan und /oder Sorbitol eingesetzt.

Die Polyetherpolyole gemäß A2 weisen einen Gehalt von 0 bis 60 Gew.-%, vorzugsweise von 0 bis 40 Gew.-%, besonders bevorzugt 0 bis 25 Gew.-% an Ethylenoxid auf.

Komponente A3

Die Komponente A3 umfasst Polyetherpolyole mit einer Hydroxylzahl gemäß DIN 53240-1 (Juni 2013) 20 mg KOH/g bis 250 mg KOH/g, vorzugsweise von 20 bis 112 mg KOH/g und besonders bevorzugt 20 mg KOH/g bis 80 mg KOH/g.

Die Herstellung der Komponente A3 erfolgt im Prinzip analog der der Komponente A2, wobei jedoch ein Gehalt an Ethylenoxid im Polyetherpolyol von > 60 Gew.-%, bevorzugt > 65 Gew.-% eingestellt wird.

Als Alkylenoxide und H-funktionelle Starterverbindungen kommen die gleichen in Frage, wie für Komponente A2 beschrieben.

Als H-funktionelle Starterverbindungen kommen jedoch bevorzugt solche in Frage, die eine Funktionalität von 3 bis 6, besonders bevorzugt von 3 aufweisen, so dass Polyethertriole entstehen. Bevorzugte H-funktionelle Starterverbindungen mit einer Funktionalität von 3 sind Glycerin und/oder Trimethylolpropan, besonders bevorzugt ist Glycerin.
In einer bevorzugten Ausführungsform ist die Komponente A3 ein Glycerin-gestarteter trifunktioneller Polyether mit einem Ethylenoxidanteil von 68 bis 73 Gew.-% und einer OH-Zahl von 35 bis 40 mg KOH/g.

Komponente A4

Die Komponente A4 umfasst Polymerpolyole, PHD-Polyole und PIPA-Polyole.
Polymerpolyole sind Polyole, die Anteile von durch radikalische Polymerisation geeigneter Monomere wie Styrol oder Acrylnitril in einem Basispolyol, wie z.B. einem Polyetherpolyol und/oder Polyethercarbonatpolyol, erzeugten festen Polymeren enthalten.
PHD (Polyharnstoffdispersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol und/oder Polyethercarbonatpolyol, hergestellt durch Alkoxylierung eines trifunktionellen Starters (wie beispielsweise Glycerin und/oder Trimethylolpropan), im Falle des Polyethercarbonatpolyols in Gegenwart von Kohlendioxid. Verfahren zur Herstellung von PHD-Dispersionen sind beispielsweise beschrieben in US 4,089,835 und US 4,260,530.
Bei den PIPA-Polyolen handelt es sich um durch Polyisocyanat-Polyaddition mit Alkanolaminenmodifizierte, vorzugsweise Triethanolamin-modifizierte Polyetherpolyole und/oder Polyethercarbonatpolyole, wobei das Polyether(carbonat)polyol eine Funktionalität von 2,5 bis 4,0 und eine Hydroxylzahl von 3 mg KOH/g bis 112 mg KOH/g (Molekulargewicht 500 bis 18000 g/mol) aufweist. Vorzugsweise ist das Polyetherpolyol "EO-capped", d.h. das Polyetherpolyol besitzt terminale Ethylenoxidgruppen. PIPA-Polyole sind in GB 2 072 204 A, DE 31 03 757 A1 und US 4 374 209 A eingehend beschrieben.

Komponente A5

Als Komponente A5 können alle dem Fachmann bekannten Polyhydroxyverbindungen eingesetzt werden, die nicht unter die Definition der Komponenten A1 bis A4 fallen, und bevorzugt eine mittlere OH-Funktionalität > 1,5 aufweisen.
Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), Polyesterpolyole, Polythioetherpolyole oder Polyacrylatpolyole, sowie Polyetherpolyole oder Polycarbonatpolyole, die nicht unter die Definition der Komponenten A1 bis A4 fallen, sein. Es können z.B. auch Ethylendiamin und Triethanolamin gestartete Polyether eingesetzt werden. Diese Verbindungen zählen nicht zu den Verbindungen gemäß der Definition der Komponente B2.

Komponente B

Die Komponente B enthält B1 ein Katalysatorsystem enthaltend

a) mindestens einen Katalysator ausgewählt aus aliphatischen tertiären Aminen, cycloaliphatischen tertiären Aminen, aliphatischen Aminoethern, cycloaliphatischen Aminoethern, aliphatischen Amidinen, cycloaliphatischen Amidinen, Harnstoff und Derivate des Harnstoffs und
b) mindestens einen Bismut basierten Katalysator.

Als Katalysatoren gemäß der Komponente B1a werden vorzugsweise

a) aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff) eingesetzt.

Als Katalysatoren B1b sind generell alle Katalysatoren auf Bismut-Basis geeignet. Bevorzugt handelt es sich

bei den Katalysatoren um Bismutcarboxylate oder Derivate davon. Geeignete Katalysatoren sind beispielsweise in der WO 2016/114876 A1 beschrieben, bevorzugte Verbindungen davon sind kommerziell erhältlich, beispielsweise unter den Handelsnamen BICAT 8840 und BICAT 8842 der Firma The Shepherd Chemical Company, Cincinatti (OH), USA oder TIB KAT 716; TIB KAT 716 LA; TIB KAT 716 XLA; TIB KAT 718; TIK KAT 720 der Firma TIB Chemicals, Mannheim.

In einer bevorzugten Ausführungsform ist der Katalysator B1b eine Verbindung wie in WO 2016114876 A1 beschrieben, insbesondere ein Bismut 1,1',1",1"'-(1,2-ethandiyldinitrilo)tetrakis[2-propanol]neodecanoat-Komplex oder Bismut 2,2',2",2"'-(1,2-ethandiyldinitrilo)tetrakis[ethanol] neodecanoat-Komplex.

Als in geringen Mengen (s.o.) gegebenenfalls mitzuverwendende aminische Katalysatoren seien genannt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine und cycloaliphatische Amidine.

Als Komponente B2 können Additive eingesetzt werden, wie

a) oberflächenaktive Zusatzstoffe, wie Emulgatoren und Schaumstabilisatoren insbesondere solche mit niedriger Emission wie beispielsweise Produkte der Tegostab® LF2-Serie;

b) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, weitere Stabilisatoren gegen Alterungs- und Witterungseinflüsse, Lösungsmittel, wie Glykole, bevorzugt Dipropylenglycol, Antioxidantien, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Additive werden beispielsweise in der EP-A 0 000 389, Seiten 18 - 21, beschrieben. Weitere Beispiele von gegebenenfalls erfindungsgemäß mitzuverwendenden Additiven sowie Einzelheiten über Verwendungs- und Wirkungsweise dieser Additive sind im Kunststoff-Handbuch, Band VII, herausgegeben von G. Oertel, Carl-Hanser-Verlag, München, 3. Auflage, 1993, z.B. auf den Seiten 104 - 127 beschrieben.

Komponente C

Als Komponente C werden Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente C eingesetzt.

Komponente D

Geeignete Di- und/oder Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 - 136, beschrieben werden, beispielsweise solche der Formel (VI)

$$Q(NCO)_n \qquad (VI),$$

wobei

n für 2 - 4, vorzugsweise 2 - 3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen

Polyisocyanate, zum Beispiel das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat eine oder mehrere Verbindungen ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt. Besonders bevorzugt wird 2,4- und/oder 2,6-Toluylendiisocyanat eingesetzt.
In einer weiteren Ausführungsform des erfindungsgemäßen Verfahrens umfasst die IsocyanatKomponente B ein Toluylendiisocyanat-Isomerengemisch aus 55 bis 90 Gew.-% 2,4- und 10 bis 45 Gew.-% 2,6-TDI.
In einer weiteren Ausführungsform des erfindungsgemäßen Verfahrens umfasst die IsocyanatKomponente D 100 Gew.-% 2,4- Toluylendiisocyanat.
In einer Ausführungsform des erfindungsgemäßen Verfahrens beträgt die Kennzahl 90 bis 120. Vorzugsweise liegt die Kennzahl in einem Bereich von 100 bis 115, besonders bevorzugt 102 bis 110. Die Kennzahl (Index) gibt das prozentuale Verhältnis der tatsächlich eingesetzten IsocyanatMenge zur stöchiometrischen, d.h. für die Umsetzung der OH-Äquivalente berechneten Menge an Isocyanat-Gruppen (NCO)-Menge an.

$$\text{Kennzahl} = (\text{Isocyanat-Menge eingesetzt}) : (\text{Isocyanat-Menge berechnet}) \cdot 100 \qquad \text{(VII)}$$

In einer Ausführungsform werden im Wesentlichen keine Phosphate eingesetzt. In einer Ausführungsform werden im Wesentlichen keine Flammschutzmittel eingesetzt.

Zur Herstellung der Polyurethanschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Reaktionskomponenten A bis C werden mit der eingesetzten Komponente D bevorzugt nach dem sogenannten Einstufenverfahren zur Reaktion gebracht. Hierbei werden zunächst alle Komponenten außer B1b vorvermischt, anschließend wird Komponente B1b hinzugefügt und die Mischung erneut gerührt. Danach wird die berechnete Menge Komponente D hinzugegeben und die Mischung wiederum gerührt und diese in eine geeignete, mit Papier ausgeschlagenen Form mit rechteckigem Querschnitt gefüllt. Die Start- und die Steigzeit werden ermittelt.

Die Polyurethanschaumstoffe liegen vorzugsweise als Polyurethanweichschaumstoffe vor und können als Form- oder auch als Blockschaumstoffe, vorzugsweise als Blockschaumstoffe hergestellt werden. Gegenstand der Erfindung sind daher ein Verfahren zur Herstellung der Polyurethanschaumstoffe, die nach diesen Verfahren hergestellten Polyurethanschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst.

Die erfindungsgemäßen Polyurethanschaumstoffe, bevorzugt Weichschaumstoffe, weisen bevorzugt eine Rohdichte gemäß DIN EN ISO 3386-1-98 im Bereich von 16 bis 60 $kg/m^3$, bevorzugt 20 bis 50 $kg/m^3$ auf.

Die Polyurethanschaumstoffe weisen bevorzugt ein Raumgewicht von 20 bis 60 $kg/m^3$ auf und/oder bevorzugt eine Stauchhärte (CLD 40%; 4. Stauchung) von 1,5 bis 8,0 kPa.

Die nach der Erfindung erhältlichen Polyurethanschaumstoffe vorzugsweise Polyurethanweichschaumstoffe, finden beispielsweise folgende Anwendung: Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

## Beispiele

Verwendete Substanzen:

Cardyon LC05 (vormals DESMOPHEN 95LC05) ist ein Polyethercarbonatpolyol für die Herstellung von konventionellen Weichschaumstoffen. Der CO2-Gehalt beträgt 14 Gew.-%.

Wasser (entionisiert)

TEGOSTAB BF 2370 Polyetherpolysiloxan-Stabilisator der Fa. Evonik, Essen.

Kosmos PRO 1 Zinn (II)neodecanoat; Katalysator der Fa. Evonik, Essen

BICAT 8840 Bismut-Katalysator der Fa. Shepherd Chemical Co.

BICAT 8842 Bismut-Katalysator der Fa. Shepherd Chemical Co.

NIAX CATALYST A-1 Katalysator der Fa. Momentive Performance Materials; bestehend aus Bis(2-dimethylaminoethyl)ether und Dipropylenglycol

DESMODUR T 80 TDI-Gemisch bestehend aus 80% 2,4-Toluylendiisocyanat und 20% 2,6-Toluylendiisocyanat

Allgemeine Arbeitsanleitung zur Herstellung der Polyether-Weichblockschaumstoff im Handschaumverfahren

Die laut Rezepturvorgabe vorgesehene Polyolmenge wurde in einem 860-ml Pappbecher zusammen mit Aminkatalysatoren, ggf. Vernetzer, Wasser, Silikonstabilisator sowie sonstigen Rezepturbestandteilen eingewogen.

Es wurde 20 Sekunden mit ca. 1160 U/min (Stufe 2,5 bei 2-fachen Ansatz, ggf. Stufe 2 bei geringerer Ansatzmenge) am Schnellrührer vermischt und anschließend der Vernetzungskatalysator (Zinn- bzw. Bismutverbindung) zugewogen und nochmals 10 Sekunden bei ca. 1160 U/min gemischt.

Zu dieser Mischung wurde das zuvor eingewogene Toluylendiisocyanat-Gemisch gegeben und 7 Sekunden bei derselben Rührgeschwindigkeit gemischt. Das Gemisch wurde in ein vorbereitetes Papierkästchen gegeben und die Reaktivität bestimmt.

Der fertige Schaum wurde im Papierkästchen in einen Trockenschrank gestellt und 20 Minuten bei 100 °C ausgeheizt, dann herausgenommen und mindestens 30 Minuten zum Abkühlen stehen gelassen.

Nach dem Abkühlen erfolgte das Aufschneiden und die Beurteilung der Zellstruktur, Offenzelligkeit etc.

| KOMPONENTEN | | - | VBsp.1 | Bsp.1 | Bsp.2 | VBsp.2 | Bsp.3 | Bsp.4 |
|---|---|---|---|---|---|---|---|---|
| CARDYON LC05 | | [Gew.-Teile] | 100,00 | 100,00 | 100,00 | 100,00 | 100,00 | 100,00 |
| WASSER gesamt | | [Gew.-Teile] | 4,50 | 4,50 | 4,50 | 4,50 | 4,50 | 4,50 |
| WASSER-Zugabe | | [Gew.-Teile] | 4,50 | 4,50 | 4,50 | 2,50 | 2,50 | 2,50 |
| TEGOSTAB BF 2370 | | [Gew.-Teile] | 1,20 | 1,20 | 1,20 | 1,20 | 1,20 | 1,20 |
| NIAX CATALYST A-1 | | [Gew.-Teile] | 0,12 | 0,12 | 0,12 | 0,15 | 0,15 | 0,15 |
| KOSMOS PRO 1 | | [Gew.-Teile] | 0,20 | | | 0,13 | | |
| BICAT 8840 | | [Gew.-Teile] | | 2,20 | | | 1,80 | |
| BICAT 8842 | | [Gew.-Teile] | | | 2,20 | | | 1,80 |
| DESMODUR T 80 | | [Gew.-Teile] | 56,01 | 56,01 | 56,01 | 35,17 | 35,17 | 35,17 |
| | | | | | | | | |
| INDEX | | [-] | 108,0 | 108,0 | 108,0 | 108,0 | 108,0 | 108,0 |
| **MECHANISCHE EIGENSCHAFTEN** | | | | | | | | |
| Raumgewicht | DIN EN ISO 845 | [kg/m$^3$] | 25,5 | 26,6 | 28,8 | 38,4 | 38,6 | 40,2 |
| Stauchhärte 40 %; 1. Stauchung | DIN EN ISO 3386-1 | [kPa] | 9,18 | 8,26 | 7,8 | 6,43 | 5,86 | 5,96 |
| Stauchhärte 40 %; 4. Stauchung | DIN EN ISO 3386-1 | [kPa] | 5,28 | 4,69 | 4,73 | 4,62 | 4,07 | 4,18 |
| Druckverformungsrest 50 % | DIN EN ISO 1856 | [%] | 3,8 | 5,1 | 17,4 | 2,1 | 4,3 | 4,6 |
| Druckverformungsrest 90 % | DIN EN ISO 1856 | [%] | 7,8 | 10,4 | 85,9 | 6,4 | 81,8 | 81,7 |
| Zugfestigkeit | DIN EN ISO 1798 | [kPa] | 117 | 135 | 69 | 133 | 104 | 120 |
| Bruchdehnung | DIN EN ISO 1798 | [%] | 99 | 125 | 59 | 107 | 202 | 182 |

(fortgesetzt)

| | | | | | | | | |
|---|---|---|---|---|---|---|---|---|
| **MECHANISCHE EIGENSCHAFTEN** | | | | | | | | |
| Versuchsbeobachtung | | | schwaches Abblasen | sehr schwaches abblasen | sehr schwaches abblasen | sehr schwaches abblasen | sehr schwaches abblasen | sehr schwaches abblasen |
| Resultat / Bemerkung | | | i.O. | i.O. | i.O. | i.O. | i.O. | i.O. |
| CPC (cycl. Propylencarbonat) | | [mg/kg] | 10 | 2 | 6 | 15 | 3 | 3 |
| i.O.: Schaumstoff ist "in Ordnung", d.h. der betreffende Schaumstoff hat keine Störungen. | | | | | | | | |

**Patentansprüche**

1. Verfahren zur Herstellung von Polyurethanschaumstoffen durch Umsetzung der folgenden Komponenten

   A eine Polyolkomponente, enthaltend

   A1 40 bis 100 Gew.-Teile mindestens eines Polyethercarbonatpolyols mit einer Hydroxylzahl gemäß DIN 53240-1:2016-06 von 20 mg KOH/g bis 120 mg KOH/g,
   A2 0 bis 60 Gew.-Teile mindestens eines Polyetherpolyols mit einer Hydroxylzahl gemäß DIN 53240-1:2013-06 von 20 mg KOH/g bis 250 mg KOH/g und einem Gehalt an Ethylenoxid von 0 bis 60 Gew.-%, wobei Polyetherpolyol A2 frei von Carbonateinheiten ist, wobei die Summe der Gewichtsteile von A1 + A2 = 100 Gewichtsteile beträgt,

   B enthaltend

   B1 ein Katalysatorsystem enthaltend

   a) mindestens einen Katalysator ausgewählt aus aliphatischen tertiären Aminen, cycloaliphatischen tertiären Aminen, aliphatischen Aminoethern, cycloaliphatischen Aminoethern, aliphatischen Amidinen, cycloaliphatischen Amidinen, Harnstoff und Derivate des Harnstoffs und
   b) mindestens einen Bismut basierten Katalysator, und

   B2 gegebenenfalls mindestens ein Additiv,

   C Wasser und/oder mindestens ein physikalisches Treibmittel,
   mit
   D mindestens einem Di- und/oder Polyisocyanat,
   wobei die Herstellung bei einer Kennzahl von 90 bis 120 erfolgt.

2. Verfahren gemäß Anspruch 1, **dadurch gekennzeichnet, dass** Komponente A die folgende Zusammensetzung aufweist:

   A1 40 bis 100 Gew.-Teile mindestens eines Polyethercarbonatpolyols mit einer Hydroxylzahl gemäß DIN 53240-1:2016-06 von 20 mg KOH/g bis 120 mg KOH/g,
   A2 0 bis 60 Gew.-Teile mindestens eines Polyetherpolyols mit einer Hydroxylzahl gemäß DIN 53240-1:2016-06 von 20 mg KOH/g bis 250 mg KOH/g und einem Gehalt an Ethylenoxid von 0 bis 60 Gew.-%, wobei Polyetherpolyol A2 frei von Carbonateinheiten ist,
   A3 0 bis 20 Gew.-Teile, bezogen auf die Summe der Gew.-Teile der Komponenten A1 und A2, mindestens eines Polyetherpolyols mit einer Hydroxylzahl gemäß 53240-1:2016-06 von 20 mg KOH/g bis 250 mg KOH/g, und einem Gehalt an Ethylenoxid von > 60 Gew.-%, wobei Polyetherpolyol A3 frei von Carbonateinheiten ist,
   A4 0 bis 40 Gew.-Teile, bezogen auf die Summe der Gew.-Teile der Komponenten A1 und A2, mindestens eines Polymerpolyols, mindestens eines PHD-Polyols und/oder mindestens eines PIPA-Polyols,
   A5 40 bis 0 Gew.-Teile, bezogen auf die Summe der Gew.-Teile der Komponenten A1 und A2, mindestens eines Polyols, welches nicht unter die Definition der Komponenten A1 bis A4 fällt,

   wobei die Angabe der Gewichtsteile der Komponenten A3, A4 und A5 jeweils bezogen sind auf die Summe der Gewichtsteile der Komponenten A1 + A2 = 100 Gewichtsteile.

3. Verfahren gemäß Anspruch 1 oder 2, **dadurch gekennzeichnet, dass** Komponente A frei ist von Komponenten A3 und/oder A4.

4. Verfahren gemäß einem der vorstehenden Ansprüche, **dadurch gekennzeichnet, dass** Komponente A umfasst:

   A1 65 bis 75 Gew.-Teile mindestens eines Polyethercarbonatpolyols mit einer Hydroxylzahl gemäß DIN 53240-1:2016-06 von 20 mg KOH/g bis 120 mg KOH/g, und
   A2 25 bis 35 Gew.-Teile mindestens eines Polyetherpolyols mit einer Hydroxylzahl gemäß DIN 53240-1:2016-06 von 20 mg KOH/g bis 250 mg KOH/g und einem Gehalt an Ethylenoxid von 0 bis 60 Gew.-%, wobei Polyetherpolyol A2 frei von Carbonateinheiten ist.

5. Verfahren gemäß einem der vorstehenden Ansprüche, **dadurch gekennzeichnet, dass** Komponente A1 mindestens ein Polyethercarbonatpolyol umfasst, welches erhältlich ist durch Copolymerisation von Kohlendioxid und Alkylenoxid in Gegenwart H-funktioneller Startermoleküle, wobei das Polyethercarbonatpolyol vorzugsweise einen $CO_2$ Gehalt von 10 bis 25 Gew.-% aufweist.

6. Verfahren gemäß einem der vorstehenden Ansprüche, **dadurch gekennzeichnet, dass** als Komponente B1b) Bismutcarboxylate und Derivate davon eingesetzt werden.

7. Verfahren gemäß einem der vorstehenden Ansprüche, **dadurch gekennzeichnet, dass** Komponente B1a) zu B1b) in einem Gewichtsverhältnis von 0,09 : 2,75 vorliegt.

8. Verfahren gemäß einem der vorstehenden Ansprüche, **dadurch gekennzeichnet, dass** Komponente D 2,4- und/oder 2,6-TDI enthält oder daraus besteht.

9. Polyurethanschaumstoff, erhältlich durch ein Verfahren gemäß einem der Ansprüche 1 bis 8.

10. Polyurethanschaumstoff gemäß Anspruch 9, **dadurch gekennzeichnet, dass** der Polyurethanschaumstoff einen Propylencarbonatgehalt von weniger als 80 mg/kg, gemessen mittels Headspace GC, aufweist.

11. Polyurethanschaumstoff gemäß Anspruch 9 oder 10, **dadurch gekennzeichnet, dass** es sich um einen Polyurethan-Weichschaumstoff handelt.

12. Verwendung eines Polyurethanschaumstoffs gemäß einem der Ansprüche 9 bis 11 zur Herstellung von Möbelpolsterungen, Textileinlagen, Matratzen, Automobilsitze, Kopfstützen, Armlehnen, Schwämme, Schaumstofffolien zur Verwendung in Automobilteilen und Bauelementen.

Europäisches Patentamt
European Patent Office
Office européen des brevets

# EUROPÄISCHER RECHERCHENBERICHT

Nummer der Anmeldung
EP 21 17 9102

| EINSCHLÄGIGE DOKUMENTE | | | |
| --- | --- | --- | --- |
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | EP 3 549 969 A1 (COVESTRO DEUTSCHLAND AG [DE]) 9. Oktober 2019 (2019-10-09)<br>* Absatz [0005]; Ansprüche 1,6 *<br>----- | 1-12 | INV.<br>C08G18/16<br>C08G18/44<br>C08G18/76 |
| A | US 2021/070917 A1 (SINGH SACHCHIDA N [US] ET AL) 11. März 2021 (2021-03-11)<br>* Beispiel 1 *<br>----- | 1-12 | |
| | | | RECHERCHIERTE SACHGEBIETE (IPC) |
| | | | C08G |

Der vorliegende Recherchenbericht wurde für alle Patentansprüche erstellt

3

| Recherchenort | Abschlußdatum der Recherche | Prüfer |
| --- | --- | --- |
| München | 30. November 2021 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 21 17 9102

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-11-2021

| Im Recherchenbericht angeführtes Patentdokument | Datum der Veröffentlichung | Mitglied(er) der Patentfamilie | Datum der Veröffentlichung |
|---|---|---|---|
| EP 3549969 A1 | 09-10-2019 | CN 111989352 A | 24-11-2020 |
| | | EP 3549969 A1 | 09-10-2019 |
| | | EP 3774981 A1 | 17-02-2021 |
| | | US 2021070916 A1 | 11-03-2021 |
| | | WO 2019193101 A1 | 10-10-2019 |
| US 2021070917 A1 | 11-03-2021 | CN 111093826 A | 01-05-2020 |
| | | EP 3681630 A1 | 22-07-2020 |
| | | US 2021070917 A1 | 11-03-2021 |
| | | WO 2019055441 A1 | 21-03-2019 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1359177 A
- EP 0222453 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- US 4089835 A
- US 4260530 A
- GB 2072204 A
- DE 3103757 A1
- US 4374209 A
- EP 0176013 A
- WO 2016114876 A1
- EP 0000389 A
- EP 0007502 A
- EP 355000 A


### In der Beschreibung aufgeführte Nicht-Patentliteratur


- *CHEMICAL ABSTRACTS,* 184538-58-7
- **HERAUSGEGEBEN VON G. OERTEL.** Kunststoff-Handbuch. Carl-Hanser-Verlag, 1993, vol. VII, 104-127
- **VON W. SIEFKEN.** *Justus Liebigs Annalen der Chemie,* vol. 562, 75-136
- **HERAUSGEGEBEN VON VIEWEG ; HÖCHTLEN.** Kunststoff-Handbuch. Carl-Hanser-Verlag, 1993, vol. VII, 139-265